# EUROPEAN PATENT APPLICATION

(11) **EP 2 858 258 A1**
(43) Date of publication of application: **08.04.2015**
(21) Application number: 13187468.7
(22) Date of filing: 07.10.2013
(51) Int. Cl.: H04B 5/00, G06K 7/00

(54) **Base station for RF communication**

(71) Applicant: NXP B.V., 5656 AG Eindhoven (NL)
(72) Inventor: Nowottnick, Jürgen, 5656 AG Eindhoven (NL); Lemke, Jürgen, 5656 AG Eindhoven (NL)
(74) Representative: Schwarzweller, Thomas

(57) **Abstract**

A device (101) for data-reception using amplitude modulation, comprises a coil (121) having a coil terminal (123) and being adapted to receive an amplitude modulated electromagnetic wave (116), whereupon an amplitude modulated signal (Vb) is induced in the coil (121) and provided at the coil terminal (123), the amplitude modulated signal (Vb) comprising a positive voltage portion (325, 427) and a negative voltage portion (324,428); and an adjustment circuit (125, 300,400) connected via an input terminal (129, 302,403) to the coil terminal (123), wherein the adjustment circuit is adapted: to adjust the amplitude modulated signal such as to reduce the positive voltage portion (325,427) by a constant amount (Δ) and to provide the adjusted amplitude modulated signal (129, 323,425) at an output terminal (131,317,427) of the adjustment circuit (125, 300,400).

## Description

### FIELD OF THE INVENTION

The present invention relates to a device and to a method for data-reception using amplitude modulation, in particular to a base station adapted for RF-communication with a transponder.

### BACKGROUND OF THE INVENTION

In a conventional system comprising a base station and a transponder, data is exchanged via electromagnetic waves, in particular amplitude-modulated electromagnetic waves, such as waves having a frequency according to the industrial scientific medical (ISM) band. In a conventional system, an amplitude modulated signal transferred from a transponder and received at the base station may be divided using a divider circuitry which divides the received amplitude modulated signal by a certain factor. This method strongly reduces the available modulated signal strength which may then be supplied to a base station demodulator, since the factor may be as high as between 10 and 100. The resulting very small signal strength urges tough requirements regarding the base station sensitivity and noise resistance. These requirements may be difficult to be fulfilled in practice and the distance range requirements for the transponder communication may hardly be met, for example for the immobilizer PKE (Passive Keyless Entry) backup link of state-of-the-art PKE systems.

There may be a need for a device and a method for data-reception which address some of the above-mentioned problems, which in particular are applicable for long distance range communications between a transponder and a base station using RF technology for data exchange.

### OBJECT AND SUMMARY OF THE INVENTION

According to an embodiment of the present invention, it is provided a device for data-reception using amplitude modulation, comprising a coil having a coil terminal (also referred to as tap point) and being adapted to receive an amplitude modulated electromagnetic wave, whereupon an amplitude modulated signal is induced in the coil and provided at the coil terminal, the amplitude modulated signal comprising a positive voltage portion and a negative voltage portion, and an adjustment circuit connected via an input terminal to the coil terminal, wherein the adjustment circuit is adapted to adjust the amplitude modulated signal such as to reduce the positive voltage portion by a constant amount and to provide the adjusted amplitude modulated signal at an output terminal of the adjustment circuit.

The device may further be configured for data transmission and may in particular be embodied as a base station of a RF-communication system enabling data communication between a base station and a transponder. Thereby, the device may comprise an energy supply. Amplitude modulation may be regarded as a technique for modulating of an amplitude of an electromagnetic wave, such as a low frequency wave or in general a radio frequency wave. In the present application, the term RF may apply to cover electromagnetic waves spanning a wide range of frequency, for example spanning a range of frequencies between 100 kHz and some GHz. The wave may have a particular (fixed) frequency, in order to in particular encode at least two states, such as a false-state and a true-state. Thereby, in particular, the false-state may correspond to the electromagnetic wave having a first amplitude and the true-state may correspond to the electromagnetic wave having a second amplitude which is different (greater or smaller) from the first amplitude. For example, in order to transfer a true-state or a false-state (i.e. 1 bit), the respective amplitude may be maintained for a number of periods such as for example for 32 periods (for a full bit) or for example for 16 periods (for a half bit, for example). In particular, a data transfer rate may be between 1 and 10 kb/s. The frequency of the electromagnetic wave may for example be 125 kHz.

Furthermore, energy which is required to operate the transponder and also data may be transmitted or exchanged by the transformer principle using the low frequency (LF) field or in general a radio frequency (RF) field.

The coil may comprise several turns of a conductive material, such as a conductive wire, such as a copper wire. The turns may be arranged around a ferromagnetic core material. The coil terminal may represent one end of the wire. By electromagnetic induction, the electromagnetic wave (which may for example be transmitted or generated by a nearby transponder) may induce a voltage in the coil which voltage may then represent the amplitude modulated signal which is provided at the coil terminal. Thereby, the amplitude modulated signal may oscillate with a base frequency of the electromagnetic wave (such as 125 kHz) such that the signal is half of the period above 0 V and half of the period below 0 V. The portion of the received amplitude modulated signal which lies above 0 V (for example during a first half of the period) may correspond to the positive voltage portion. The portion, in which the voltage of the amplitude modulated signal lies below 0 V may correspond to the negative voltage portion. Thereby, the positive voltage portion may span a range of voltages and may comprise a maximum positive voltage. Similarly, the negative voltage portion may span a range of negative voltages including a maximum negative voltage. According to this embodiment of the present invention, the positive voltage portion is aimed to be reduced, in order to protect further (downstream) processing circuitry, such as a demodulator, from damage, since the demodulator may commonly comprise semiconductor circuitry which may be sensitive to high positive voltages.

According to this embodiment of the present invention, a divider circuit is not necessary and may be dispensed with for protecting the downstream circuitry. Instead or additionally to a divider, the adjustment circuit is adapted to reduce the positive voltage portion by a constant amount, i.e. an amount which does not depend on the instantaneous level of the amplitude modulated signal (as is the case when the amplitude modulated signal would simply be divided) but is constant independent of the instantaneous strength or voltage value of the modulated signal. In a particular embodiment, the amplitude modulated signal is shifted as a whole such as to reduce the positive voltage portion. In particular, while the received amplitude modulated signal may have an average at around 0 V, the adjusted amplitude modulated signal may have an average which lies below 0 V and may comprise a maximum voltage which is just slightly above 0 V, such as between 0 V and 10 V, or between 0 V and 5 V above 0 V. According to another embodiment of the present invention, also the average of the adjusted amplitude modulated signal may be around 0 V but nevertheless the positive voltage portion may be reduced by a constant amount compared to the received amplitude modulated signal.

The constant amount by which the amplitude modulated signal, in particular by which the positive voltage portion of the amplitude modulated signal, is reduced may depend on the particular components and properties of electronic elements and items comprised in the adjustment circuit. The adjusted amplitude modulated signal may be suitable to be supplied to downstream circuitry, in particular comprising semiconductor elements or circuitry, such as a demodulator. Depending on the rating or the electric/electronic requirements of the downstream circuitry, the adjustment circuit may be assembled with appropriate components, in order to meet the requirements of the downstream circuitry, in particular given a particular strength of the received amplitude modulated signal, in particular regarding an input voltage.

An advantage to reduce the positive voltage portion by a constant amount in contrast to applying a divider circuitry may in particular be observed if the received amplitude modulated signal is composed of a relatively large carrier portion (having a constant amplitude) and a relatively small signal portion (having a varying amplitude encoding the intended data), i.e. having a small modulation index. In this case, according to the embodiment of the present invention, only the relatively large carrier portion of the received amplitude modulated signal is reduced but not the signal related portion, so that after adjustment a modulation index may even be increased so that demodulation may be more reliable and simpler. Furthermore, thereby, a higher sensitivity of the data-reception may be achieved and thereby, a wider distance range of data-reception may be achieved.

In particular, according to embodiments of the present invention, it is proposed to shift the DC level of the amplitude modulated signal before demodulation, rather than to divide it by for example a resistive or capacitive attenuator. In particular, the amplitude modulation of the carrier (region of interest) may be shifted down to a voltage which can easier be processed by state-of-the-art silicon processes which are for example comprised in a demodulator circuit. Thereby, the method may preserve the amplitude modulation (entropy) at the antenna tap point (coil terminal) and may make it almost 100% usable at an input of a downstream circuitry, such as a demodulator. Thereby, it should be noted that the conventional divider circuit or attenuator may reduce the amplitude modulation by a factor of typically 10 - 100 which may not present in embodiments of the present invention.

A modulation index of the amplitude modulated signals being exchanged, in particular received by the device for data-reception may be very small. Furthermore, it may be achieved to maximize a distance range of the transponder communication or the distance range of the base station-transponder communication.

According to an embodiment of the present invention, the amplitude modulated signal is adjusted such that the negative voltage portion is reduced (i.e. decreased in its size) or enhanced (i.e. increased in its size) by a constant amount.

In the case the negative voltage portion is enhanced by a constant amount, this may be achieved by globally shifting the amplitude modulated signal. In this case, before supplying the adjusted amplitude modulated signal to a downstream circuitry, the negative voltage portion may at least partially be clipped off, in order to avoid or reduce damage of downstream components.

In the case where (also) the negative voltage portion is reduced, the reduction of the negative voltage portion and the positive voltage portion may be different or may be by a similar or even a same amount or factor. Thereby, the device may be simplified. Furthermore, an additional clipping circuitry may be avoided.

According to an embodiment of the present invention, the adjustment circuit comprises a first adjustment circuit or a second adjustment circuit or a series arrangement of a first adjustment circuit and a second adjustment circuit.

Thus, the device may include only the first adjustment circuit but not the second adjustment circuit. Alternatively, the device may comprise only the second adjustment circuit but not the first adjustment circuit.

Alternatively, the device may comprise the first adjustment circuit as well as the second adjustment circuit, in particular arranged in a series connection. In particular, connected to the coil terminal may be the second adjustment circuit and connected to an output terminal of the second adjustment circuit may be the first adjustment circuit. Thereby the output terminal of the first adjustment circuit may then be connected to downstream circuitry, such as a demodulator. Thereby, in particular a very advantageous combination of the principles of the first adjustment circuit and the second adjustment circuit may be achieved, wherein a coarse adaptation or adjustment of the amplitude modulated signal may be achieved by the second adjustment circuit and a further fine adaptation or adjustment to a region of interest of the adjusted amplitude modulated signal may be achieved by applying successively the first adjustment circuit. Thereby, a large flexibility may be provided to tailor the adjusted signal to fit requirements of downstream circuitry.

According to an embodiment of the present invention, the first adjustment circuit comprises a first resistor directly connected to the input terminal; a second resistor indirectly connected to the first resistor and connected to a ground potential; a capacitor connected to the first resistor; a diode connected with its cathode, in a first series arrangement, to the second resistor, the first series arrangement being connected to the capacitor and to the ground potential; and a third resistor connected, in parallel to the first series arrangement, to the output terminal and to the ground potential.

Thereby, the first resistor may keep the impact of the first adjustment circuit on the base station antenna resonant circuit low. Further, the capacitor may remove the DC component which may be available at the coil terminal (antenna tap point). Further, the diode, together with the second resistor, may restore a new DC value which may be more suited to the downstream semiconductor or silicon circuitry. Thereby, in particular, the maximum or top of the sine wave after the adjustment circuitry may be the threshold voltage of the diode, if the third resistor is not stuffed. The third resistor may act as an opposing element to the diode and the first resistor, trying to keep the DC value at a ground or earth level. The presence of the third resistor may reduce the impact of electromagnetic interferences on the output voltage of the circuit.

The ratio between resistances of the second resistor and the third resistor may determine the DC level at the output terminal of the first adjustment circuit.

The ratio between the resistance of the second resistor and the sum of the resistances of the first resistor and the second resistor may determine the preserved amplitude modulation at the output terminal of the first adjustment circuit, assumed that the resistance of the third resistor is much larger or greater than the resistance of the second resistor.

The output signal of the first adjustment circuit may be fed to an ASK (amplitude shift keying) demodulator. ASK may use a finite number of amplitudes, each assigned a unique pattern of bits. Each amplitude may encode an equal number of bits. Each pattern of bits may form the symbol that is represented by the particular amplitude. Thereby, a simple implementation may be provided.

According to an embodiment of the present invention, the amplitude modulated signal is adjusted such that the positive voltage portion is reduced to a value depending on a cut-in voltage/threshold voltage of the diode and/or a ratio between a resistance of the second resistor and a resistance of the third resistor.

The diode may be conductive when the voltage between the anode and the cathode of the diode is above the cut-in voltage. Thereby, the cut-in voltage of the diode may for example be between 0.3 V and 1.0 V. For example, the cut-in voltage of a silicon diode may be at around 0.7 V. A Germanium diode may have a cut-in voltage of about 0.3 V. Thus, the diode may short-circuit any voltage which is above the cut-in voltage.

According to an embodiment of the present invention, a clipping circuit is connected to the output terminal of the adjustment circuit and adapted to reduce a negative voltage portion of the adjusted amplitude modulated signal.

The clipping circuit may effectively reduce or even remove a (portion of) the negative voltage portion which may otherwise damage downstream circuitry. The clipping circuit may be implemented in any manner which is known to the skilled person. In particular, the very high negative voltages after the DC shift, as achieved by the first adjustment circuit which may result at certain implementation of the invention may simply be clipped by a dedicated circuitry to protect the demodulator integrated circuit from very high negative voltage amplitude.

Therefore, for example, starting from a clamping circuit as is known from analog video processing, a clamping circuit may be devised and/or modified to form an adjustment circuit according to an embodiment of the present invention. Video clamp circuits may typically use a "hard" clamp on the synchronization signal level and therefore may do not use a second resistor, because they do not have to preserve an amplitude modulation on top of the signal. Differently from a conventionally video clamp circuit, according to an embodiment of the present invention, a "soft" clamp with a second resistor having resistance not equal to zero Ohm may be required to preserve the amplitude modulation on top of the signal. Thus, a particular adaptation/modification of a conventional circuit may be required to reach at an adjustment circuit according to an embodiment of the present invention that may be applied to high voltage ASK modulated transponder signals with low modulation index.

According to an embodiment of the present invention, the second adjustment circuit comprises another first resistor indirectly connected to the input terminal; another second resistor directly connected to the other first resistor and connected to a ground potential; a second series arrangement of a first Zener diode and a second Zener diode arranged opposite to the first Zener diode, the second series arrangement being connected in series with the other first resistor, wherein the other first resistor is indirectly connected to the input terminal via the second series arrangement.

This embodiment may also be applied to ASK modulated transponder signals having low modulation index. Thereby, also according to this embodiment, the adjusted amplitude modulated signal may comply with requirements of downstream circuitry, in particular including silicon components. Thereby, the first Zener diode and the second Zener diode may remove a voltage region in the range between 0 V and the threshold voltage of the Zener diodes (or breakthrough voltages). The reduced voltage (after the two Zener diodes) may include the full amplitude modulation as received at the input of the second adjustment unit and may be further reduced by the ratio of the other second resistor and the sum of the resistances of the other first resistor and the other second resistor to a value which is more suited for the downstream circuitry. Thereby, the resistance of the other first resistor may be chosen as 0 Ohm in certain applications, keeping the full amplitude modulation at the output terminal.

In the case, where the resistance of the other first resistor is different from 0 Ohm, the ratio between the resistance of the other second resistor and the sum of the resistances of the other first resistor and the other second resistor may define the attenuation of the amplitude modulation at the output terminal. The output signal, i.e. the adjusted amplitude modulated signal, may again be supplied to a ASK demodulator.

According to an embodiment of the present invention, the constant amount by which the positive voltage portion of the amplitude modulated signal is reduced depends on a breakdown voltage of the first and second Zener diodes and the ratio between a resistance of the other second resistor and the sum of resistances of the other first resistor and the other second resistor.

Thereby, the desired characteristic (in particular regarding strength) of the adjusted amplitude modulated signal may be chosen and selected and thereby adjusted.

According to an embodiment of the present invention, a ratio between a resistance of the second resistor and the sum of resistances of the first resistor and the second resistor and/or another ratio between a resistance of the other second resistor and the sum of resistances of the other first resistor and the other second resistor determines a strength of the adjusted amplitude modulated signal.

Thereby, the adjusted amplitude modulated signal may further be tailored to suit downstream circuitry.

According to an embodiment of the present invention, a resistance of the first resistor and/or the other first resistor is between 100 Ohm and 10 kOhm, wherein a resistance of the second resistor and/or the other second resistor is between 1 kOhm and 100 kOhm, in particular between 5 times and 15 times as high as the resistance of the first resistor or the other first resistor, wherein a resistance of the third resistor is between 100 kOhm and 100 MOhm, in particular between 70 times and 130 times as high as the resistance of the second resistor.

Thereby, advantageous properties of the adjusted amplitude modulated signal may be achieved.

According to an embodiment of the present invention, a modulation index of the amplitude modulated signal at the input terminal is between 1/100,000 and 1/1,000, in particular between 1/100,000 and 1/10,000, the modulation index defining a ratio between a modulating amplitude portion and a constant amplitude portion of the amplitude modulated signal, wherein an adjusted modulation index of the adjusted amplitude modulated signal at the output terminal is between 1/1,000 and 1/10, in particular between 1/1,000 and 1/100, the adjusted modulation index defining a ratio between an adjusted modulating amplitude portion and a adjusted constant amplitude portion of the adjusted amplitude modulated signal.

Thereby, the device may be able to handle amplitude modulated input signal having a relatively low modulation index and provides to downstream circuitry an adjusted amplitude modulated signal having a (largely) increased modulation index. Thereby, processing may be simplified and may be more reliable comprising to conventional devices and methods, in particular allowing wider communication distances.

According to an embodiment of the present invention, a frequency of the amplitude modulated electromagnetic wave uses an Industrial Scientific Medical band, is between 50 kHz and 200 kHz, in particular between 100 kHz and 150 kHz, in particular around 125 kHz, wherein in particular the amplitude modulated electromagnetic wave applies a amplitude shift keying modulation. In particular, a frequency of 125 kHz may be used which may be opened for applications and which may have advantages in environments comprising metal material and may have also advantages to be relatively insensitive to detuning (for example by touching).

Thereby, technically feasible and open frequencies may be used. Thereby, the device may be assembled with and operated together with conventional elements and components.

According to an embodiment of the present invention, the device is embodied as a RF-communication base station, in particular arranged within a vehicle, further in particular in a car, wherein the base station is in particular adapted to communicate with a passive transponder and supply energy to the passive transponder using the coil.

In particular, the transponder function may include immobilizer-based authentication and data exchange which may be supported by the device when embodied as a base station.

In particular, the base station may be adapted for use in automotive applications, wherein transponder functions, like immobilizer-based authentication and data exchange need to be executed. In particular, the device for data-reception, in particular as embodied as a base station for RF-communication may be adapted for longer distance passive transparent communication in a noisy automotive environment.

According to an embodiment of the present invention, the base station further comprises a demodulator, in particular ASK demodulator, comprising semiconductor circuitry, connected to the output terminal and adapted to demodulate the adjusted amplitude modulated signal.

Thereby, the demodulator may output a digital signal comprising logical values, such as a true value and a false value. Further downstream circuitry may decrypt the received data, if encrypted.

It should be understood that features which are individually or in any combination disclosed, described, mentioned or provided for a device for data-reception using amplitude modulation may also be applied, provided or employed for a method for data-reception using amplitude modulation according to an embodiment of the present invention and vice versa.

According to an embodiment of the present invention it is provided a method for data-reception using amplitude modulation, comprising receiving an amplitude modulated electromagnetic wave by a coil having a coil terminal, inducing, in the coil, an amplitude modulated signal; providing the amplitude modulated signal at the coil terminal, the amplitude modulated signal comprising a positive voltage portion and a negative voltage portion; adjusting, using an adjustment circuit connected via an input terminal to the coil terminal, the amplitude modulated signal such as to reduce the positive voltage portion by a constant amount; and providing the adjusted amplitude modulated signal at an output terminal of the adjustment circuit.

The aspects defined above and further aspects of the invention are apparent from the examples of embodiment to be described hereinafter and are explained with reference to these examples of embodiment.

### BRIEF DESCRIPTION OF THE DRAWINGS

The invention will be described in more detail hereinafter with reference to examples of embodiment but to which the invention is not limited.
Fig. 1 schematically illustrates a system for communicating between a base station according to an embodiment of the present invention and a transponder;
Fig. 2A exemplarily illustrates an amplitude modulated signal transmitted from the transponder illustrated in Fig. 1 towards the base station illustrated in Fig. 1.
Fig. 2B schematically illustrates a received amplitude modulated signal received at the base station illustrated in Fig. 1 according to an embodiment of the present invention;
Fig. 3 schematically illustrates a first adjustment circuit which may be included in the base station or a device for data-reception according to an embodiment of the present invention;
Fig. 4 schematically illustrates a second adjustment circuit which may be included into a base station or a device for data-reception according to an embodiment of the present invention; and
Fig. 5 schematically illustrates a system for communicating amplitude modulated signals according to an exemplary embodiment.

### DESCRIPTION OF EMBODIMENTS

The illustration in the drawing is in schematic form.

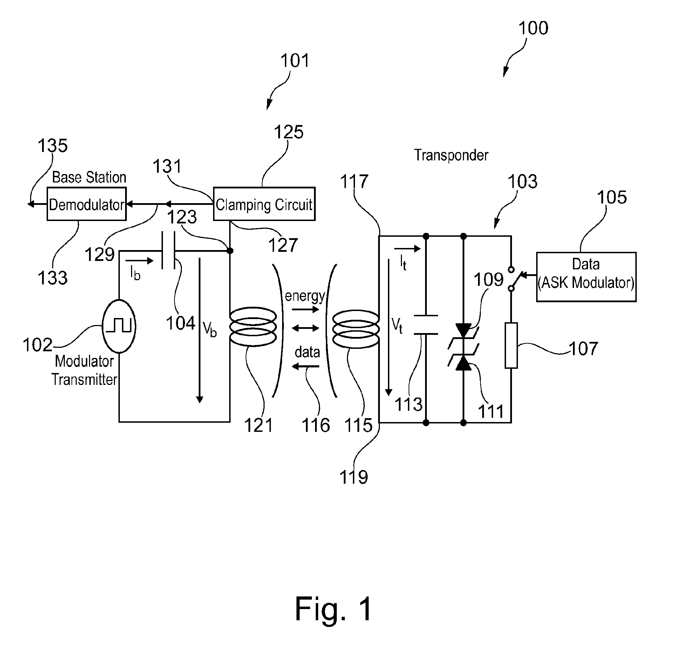

The amplitude modulation communication system 100 illustrated in **Fig. 1** comprises a base station 101 according to an embodiment of the present invention (representing a device for data-reception) and a transponder 103 which may transmit an amplitude modulated signal 116 (an electromagnetic wave) towards the base station 101. Thereby, the transponder 103 may be implemented or constructed as is well-known in the art to the skilled person. In the exemplary transponder 103, a data ASK modulator 105, a resistor 107 are in parallel connected to a pair of Zener diodes 109, 111 which are in parallel connected to a capacitor 113 and a coil 115 which then may transmit an amplitude modulated signal 116, if between terminals 117 and 119 of the coil, a particular voltage Vₜ is applied.

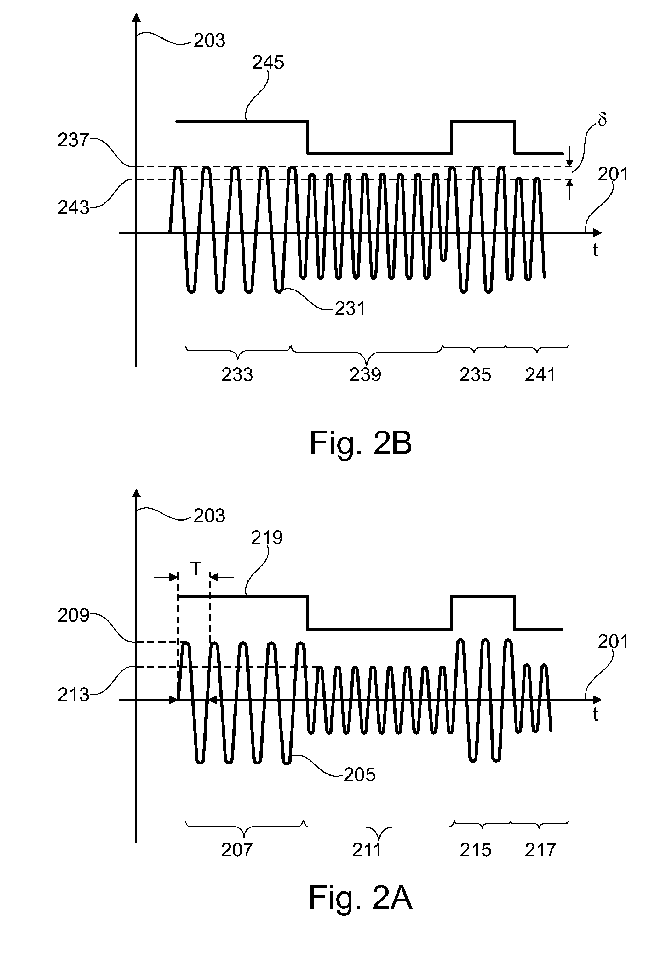

An example of the transponder voltage Vₜ is illustrated in **Fig. 2A****,** wherein an abscissa 201 denotes the time and an ordinate 203 denotes the amplitude of the voltage Vₜ. The trace 205 indicates the amplitude of the transponder voltage Vₜ as a function of time t. During a time interval 207, the amplitude of the sine wave has a first value 209 and during a second time interval 211, the amplitude of the transponder voltage has a second value 213 which is lower than the first value 209. Furthermore, in a further time interval 215, the amplitude again assumes the first value and in another time interval 217, the amplitude again assumes the second amplitude value 213. By this amplitude modulated signal 205, thus, two states may be encoded, for example a logical true value (e.g. during the time intervals 207, 215) and a logical false value (during the time intervals 211, 217), as is indicated by the curve 219.

When the transponder coil 115 (see Fig. 1) is excited with the transponder voltage Vₜ as is for example illustrated in Fig. 2A, an electromagnetic wave 116 is generated which is then transmitted towards the base station 101 which may represent a device for data-reception according to an embodiment of the present invention.

The base station 101 comprises a coil 121 which has a coil terminal 123 and which is adapted to receive an amplitude modulated electromagnetic wave, whereupon an amplitude modulated signal V_{b} (i.e. a base station voltage) is induced in the coil 121 and provided at the coil terminal 123. Furthermore, the base station 101 comprises an adjustment circuit 125 which is via an input terminal 127 connected to the coil terminal 123. Thereby, the adjustment circuit 125 is adapted to adjust the amplitude modulated signal V_{b} such as to reduce a positive voltage portion of the amplitude modulated signal V_{b} by a constant amount and to provide the thereby resulting adjusted amplitude modulated signal 129 (also referred to as V_{b_adjusted}) at an output terminal 131 of the adjustment circuit 125.

In the illustrated embodiment, the adjusted amplitude modulated signal 129 is supplied to a demodulator 133 which is also comprised within the base station 101. The demodulator may demodulate the adjusted amplitude modulated signal in order to output a digital signal 135.

**Fig. 2B** illustrates an exemplary time trace of the amplitude modulated signal V_{b} which is received by the base station 101. Thereby, an abscissa 201 indicates a time and an ordinate 203 indicating an amplitude of the received amplitude modulated signal V_{b}. Thereby, the trace 231 illustrates the amplitude modulated signal V_{b} which is received using the coil 121 illustrated in Fig. 1, when the transponder 103 illustrated in Fig. 1 transmits the signal 205 as illustrated in Fig. 2A. Therefore, the trace of the transmitted signal 205 and the trace of the received signal 231 at the base station 101 show some resemblance in that the received signal exhibits in a time interval 233 and in a further time interval 235 a first amplitude value 237 and exhibits in the time intervals 239 and 241 a second amplitude 243 which is smaller than the first amplitude 237. However, as can be taken from Fig. 2B, a modulation index reflecting the difference between the two amplitude values 237, 243 is relatively low. Therefore, it is very difficult to distinguish the two amplitude values 237 and 243 which in fact represent logical high and logical low values, respectively. However, according to embodiments of the present invention, the base station 101 or in general a device for data-reception is adapted to provide a relatively high sensitivity, in order to enable reception and demodulation of amplitude modulated signals which have a relatively poor modulation index.

The curve 245 is an example of the digital data 135 output by the demodulator 133 illustrated in Fig. 1. Thereby, the trace 245 represents a logical high value, followed by a logical low value, followed by a logical high value and again followed by a logical low value. As can be appreciated from the transmission trace 205 and also the reception trace 231, a logical high or low value may be coded using two or more periods T (of a periodic signal, in particular sine or cosine signal) which represent the repetition period of the wave which is related to the frequency via the relationship T=1/f, wherein f is for example within a low frequency or LF-band, which may for example be 125 kHz. Different coding schemes may be applied for encoding a bit or a half bit, in particular using one or more repetition periods T of the amplitude modulated signal.

According to embodiments of the present invention, the adjustment circuit 125 of the base station illustrated in Fig. 1 may comprise either a first adjustment circuit or a second adjustment circuit. Alternatively, the adjustment circuit 125 may comprise both a first adjustment circuit and a second adjustment circuit according to embodiments of the present invention which are described below in more detail.

The base station 101 further comprises a modulator transmitter 102 and a capacitor 104 connected in series to the coil terminal 123.

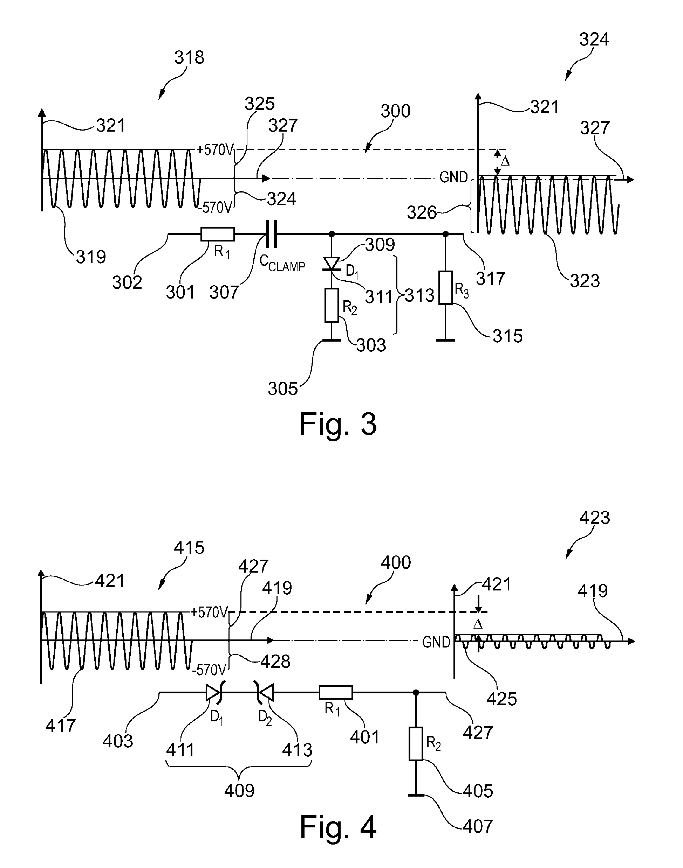

**Fig. 3** schematically illustrates a first adjustment circuit 300 according to an embodiment of the present invention which may be included in the adjustment circuit 125 of the base station 101 illustrated in Fig. 1. The first adjustment circuit 300 illustrated in Fig. 3 comprises a first resistor 301 which may be directly connected to the input terminal 127 of the adjustment circuit 125 illustrated in Fig. 1. The first adjustment circuit 300 illustrated in Fig. 3 further comprises a second resistor 303 which is indirectly connected to the first resistor 301 and which is connected to a ground potential 305. The first adjustment circuit 300 further comprises a capacitor 307 which is connected to the first resistor 301. Further, the first adjustment circuit 300 comprises a diode 309 which is with its cathode 311, in a first series arrangement 313 connected to the second resistor 303. Thereby, the first series arrangement 313 is connected to the capacitor 307 and to the ground potential 305. Further, the first adjustment circuit 300 comprises a third resistor 315 which is, in parallel to the first series arrangement 313, connected to the ground potential and to an output terminal 317 which may represent the output terminal 131 of the adjustment circuit 125 as illustrated in Fig. 1. Further, the input terminal 302 of the first adjustment circuit 300 may represent the input terminal 127 of the adjustment circuit 125 illustrated in Fig. 1.

As an insert 318 on the left-hand side of Fig. 3, a trace 319 of an exemplary input amplitude modulated signal is indicated, wherein a modulation or change of the amplitude of the signal 319 is not visible due to the low modulation index so that the amplitude of the input amplitude modulated signal 319 appears to stay at a constant level. However, this is not the case but the amplitude of the amplitude modulated signal 319 in fact varies with time. As can be appreciated from the trace 319 of the insert 318 (the ordinate 321 representing the amplitude of the signal 319, the abscissa 327 representing time), the voltage signal 319 (which may represent the voltage V_{b} as illustrated in Fig. 1) oscillates between +570 V and -570 V, thus a voltage range which may damage downstream circuitry. Therefore, the first adjustment circuit 300 is adapted to generate, from the amplitude modulated signal 319 which is input to the first adjustment circuit 300 at the input terminal 302 an adjusted amplitude modulated signal 323 as is indicated in the insert 324 of Fig. 3. As can be appreciated from the trace 323, showing the adjusted amplitude modulated signal, the signal 323 is shifted relative to the signal 319 such that a positive voltage portion 325 of the input amplitude modulated signal 319 is reduced by a constant amount Δ which is not varying with time as indicated on the abscissa 327.

The first resistor 301 of the first adjustment circuit 300 may keep the impact of the adjustment circuit 125 on the base station antenna resonance circuit low. Further, the capacitor 307 (also referred to as clamp capacitor) may remove the DC-component which may be available at the antenna tap point, i.e. the coil terminal 123 illustrated in Fig. 1. The diode 309 together with the second resistor 303 may restore a new DC value which is then more suitable for state-of-the-art silicon processes. Thereby, the top of the sine wave 323 after the adjustment (clamping) may be the threshold voltage of the diode 309, if the third resistor 315 is not stuffed.

The third resistor 315 may act as an opposing element to the diode 309 and to the second resistor 303, trying to keep the DC value at the ground level. Thereby, the presence of the third resistor 315 may reduce the impact of electromagnetic interferences on the output voltage 323 (at the terminal 317) of the adjustment circuit 300.

The ratio between resistances of the second resistor 303 and the third resistor 315 may determine the DC level at the output 317 of the first adjustment circuit 300. Further, the ratio between resistances of the second resistor 303 and the sum of the resistances of the first resistor 301 and the second resistor 303 may determine the preserved amplitude modulation at the output 317 of the first adjustment circuit 300, assumed that the resistance of the third resistor 315 is much larger than the resistance of the second resistor 303. Further, the output signal (such as signal 323) at the output terminal 317 may be supplied to a ASK demodulator, such as the demodulator 133 illustrated in Fig. 1.

**Fig. 4** schematically illustrates a second adjustment circuit 400 which may for example partly or completely form the adjustment circuit 125 of the base station 101 illustrated in Fig. 1. Thereby, the second adjustment circuit 400 comprises another first resistor 401 which is indirectly connected to the input terminal 403 which may represent the input terminal 127 of the adjustment circuit 125 illustrated in Fig. 1. Further, the second adjustment circuit 400 comprises another second resistor 405 which is directly connected to the first other resistor 401 and which is connected to a ground potential 407. The second adjustment circuit 400 further comprises a second series arrangement 409 of a first Zener diode 411 and a second Zener diode 413 being connected in series with the other first resistor 401. Thereby, the other first resistor 401 is indirectly connected, via the first and second diodes 411, 413, to the input terminal 403.

The insert 415 illustrates an example input amplitude modulated signal 417, wherein an abscissa 419 denotes the time and an ordinate 421 denotes the amplitude of the input amplitude modulated signal 417. Due to the low modulation index, the in fact present modulation of the amplitude is not visible in the insert 415. The other insert 423 illustrates an adjusted amplitude modulated signal trace 425 which evolves at the output terminal 427 of the second adjustment circuit 400. As can be taken by comparing the traces 417 and 425, the positive voltage portion 427 of the input amplitude modulated signal 417 is induced by a constant amount Δ, to form the adjusted amplitude modulated signal 425.

In the second adjustment circuit 400 illustrated in Fig. 4, the Zener diodes 411, 413 may remove a voltage region without interest in the range between 0 V and the threshold or breakdown voltage of the Zener diodes. The remaining reduced voltage (see the maximum of the adjusted amplitude modulated signal 425), but including the full amplitude modulation as received at the input terminal 403 of the second adjustment circuit 400 is further reduced by the ratio of resistances between the other second resistor and the sum of the other first resistors and the other second resistor 401, 405 to a value which is more suited for state-of-the-art silicon processes. Thereby, the value of the resistance of the other first resistor 401 may be chosen as 0 Ohm in certain applications, keeping the full amplitude modulation at the output terminal 427. In other embodiments, the resistance of the other first resistor 401 may be different from 0 Ohm. If the resistance of the other first resistor 401 is different from 0 Ohm, the ratio between the resistance of the other second resistor 405 and the sum of the resistances of the other first resistor 401 and the other second resistor 405 may determine the attenuation of the amplitude modulation at the output terminal 427.

Further, the output signal at the output terminal 427 (for example the output signal or the adjusted amplitude modulated signal 425) may be supplied to a ASK demodulator, such as the demodulator 133 of the base station 101 illustrated in Fig. 1.

According to a not illustrated embodiment, the principles illustrated in Fig. 3 and in Fig. 4 may be combined. For example, a coarse adaptation or adjustment of the amplitude modulated signal (received at the input terminal 127 of the adjustment circuit 125 illustrated in Fig. 1) may be achieved by connecting the second adjustment circuit 400 illustrated in Fig. 4 in a series arrangement with the first adjustment circuit 300 illustrated in Fig. 3 so that the second adjustment circuit 400 achieves a coarse adaptation or adjustment and the first adjustment circuit 300 successively achieves a fine adaptation or adjustment of the adjusted amplitude modulated signal. Thereby, a more accurate adjustment of the amplitude modulated signal which is originally received at the coil 121 may be achieved.

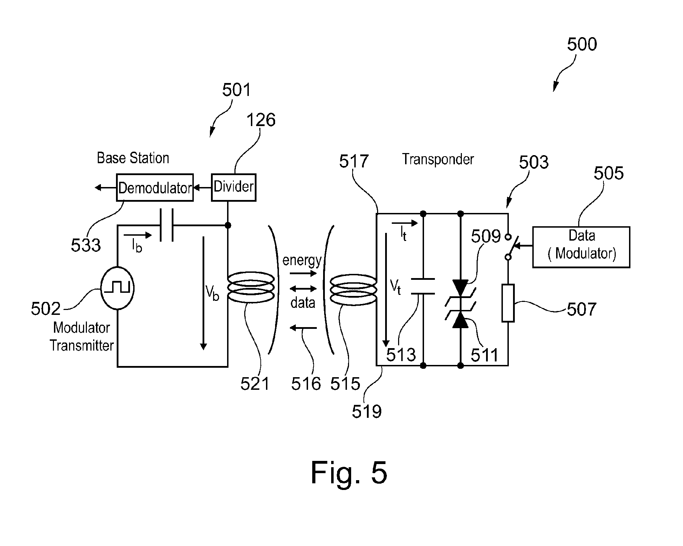

**Fig. 5** schematically illustrates a conventional system 500 for data communication using amplitude modulation of an electromagnetic wave. Elements which are identical or similar to the elements of the system 100 illustrated in Fig. 1 are indicated with same reference numbers in which however the first digit is replaced by the digit "5". In a difference to the system 100 illustrated in Fig. 1, the conventional base station 501 does not comprise an adjustment circuit, such as the adjustment circuit 125 of the base station 101 according to an embodiment of the present invention, as is illustrated in Fig. 1. Instead, the conventional base station 501 includes a divider circuit 126 which divides the input voltage V_{b} representing the amplitude modulated signal by a particular factor, which may be between 10 and 100, in order to protect downstream circuitry, such as the demodulator 533 from damage. However, thereby, also the modulation index decreases (by the factor) so that detection or demodulation of a relatively low signal may not be possible anymore, in particular when the transponder 503 is relatively far spaced apart from the receiving base station 501.

According to an embodiment of the present invention, the base station 101 illustrated in Fig. 1 is adapted to carry out a method for data-reception using amplitude modulation. Thereby, the method comprises receiving an amplitude modulated electromagnetic wave by a coil having a coil terminal, inducing, in the coil, an amplitude modulated signal; providing the amplitude modulated signal at the coil terminal, the amplitude modulated signal comprising a positive voltage portion and a negative voltage portion; adjusting, using an adjustment circuit connected via an input terminal to the coil terminal, the amplitude modulated signal such as to reduce the positive voltage portion by a constant amount; and providing the adjusted amplitude modulated signal at an output terminal of the adjustment circuit.

Thereby, the first adjustment circuit 300, or the second adjustment circuit 400 illustrated in Fig. 4 or a combination of the first adjustment circuit 300 illustrated in Fig. 3 and the second adjustment circuit illustrated in Fig. 4 may be employed.

The base station may for example be included in a vehicle, such as a car and may perform an immobilizer function which may interact with a (passive) transponder which may be embodied as a key for a user of the car. The vehicle may include a casing which may include metal which may shield electromagnetic waves, such that amplitude modulation communication methodology, for example using LF frequency, may be difficult in conventional systems.

## Claims

1. Device for data-reception using amplitude modulation, comprising:
a coil having a coil terminal and being adapted to receive an amplitude modulated electromagnetic wave, whereupon an amplitude modulated signal is induced in the coil and provided at the coil terminal, the amplitude modulated signal comprising a positive voltage portion and a negative voltage portion; and
an adjustment circuit connected via an input terminal to the coil terminal, wherein the adjustment circuit is adapted:
to adjust the amplitude modulated signal such as to reduce the positive voltage portion by a constant amount, and
to provide the adjusted amplitude modulated signal at an output terminal of the adjustment circuit.

2. Device according to claim 1, wherein the amplitude modulated signal is adjusted such that the negative voltage portion is reduced or enhanced by a constant amount.

3. Device according to claim 1 or 2, wherein the adjustment circuit comprises a first adjustment circuit or a second adjustment circuit or a series arrangement of a first adjustment circuit and a second adjustment circuit.

4. Device according to claim 3, wherein the first adjustment circuit comprises:
a first resistor directly connected to the input terminal;
a second resistor indirectly connected to the first resistor and connected to a ground potential;
a capacitor connected to the first resistor;
a diode connected with its cathode, in a first series arrangement, to the second resistor the first series arrangement being connected to the capacitor and to the ground potential; and
a third resistor connected, in parallel to the first series arrangement, to the output terminal and to the ground potential.

5. Device according to claim 4, wherein the amplitude modulated signal is adjusted such that the positive voltage portion is reduced to a value depending on a cut-in voltage/threshold voltage of the diode and/or a ratio between a resistance of the second resistor and a resistance of the third resistor.

6. Device according to claim 4 or 5, further comprising:
a clipping circuit connected to the output terminal of the adjustment circuit and adapted to reduce a negative voltage portion of the adjusted amplitude modulated signal.

7. Device according to one of claims 3 to 7, wherein the second adjustment circuit comprises:
another first resistor indirectly connected to the input terminal;
another second resistor directly connected to the other first resistor and connected to a ground potential;
a second series arrangement of a first Zener diode and a second Zener diode arranged opposite to the first Zener diode, the second series arrangement being connected in series with the other first resistor,
wherein the other first resistor is indirectly connected to the input terminal via the second series arrangement.

8. Device according to claim 7, wherein the constant amount by which the positive voltage portion of the amplitude modulated signal is reduced depends on a breakdown voltage of the first and second Zener diodes and the ratio between a resistance of the other second resistor and the sum of resistances of the other first resistor and the other second resistor.

9. Device according to one of claims 3 to 8, wherein
a ratio between a resistance of the second resistor and the sum of resistances of the first resistor and the second resistor and/or
another ratio between a resistance of the other second resistor and the sum of resistances of the other first resistor and the other second resistor
determines a strength of the adjusted amplitude modulated signal.

10. Device according to one of the preceding claims,
wherein a resistance of the first resistor and/or the other first resistor is between 100 Ohm and 10 kOhm,
wherein a resistance of the second resistor and/or the other second resistor is between 1 kOhm and 100 kOhm, in particular between 5 times and 15 times as high as the resistance of the first resistor the other first resistor,
wherein a resistance of the third resistor is between 100 kOhm and 100 MOhm, in particular between 70 times and 130 times as high as the resistance of the second resistor.

11. Device according to one of the preceding claims,
wherein a modulation index of the amplitude modulated signal at the input terminal is between 1/100,000 and 1/1,000, in particular between 1/100,000 and 1/10,000, the modulation index defining a ratio between a modulating amplitude portion and a constant amplitude portion of the amplitude modulated signal,
wherein an adjusted modulation index of the adjusted amplitude modulated signal at the output terminal is between 1/1,000 and 1/10, in particular between 1/1,000 and 1/100, the adjusted modulation index defining a ratio between an adjusted modulating amplitude portion and a adjusted constant amplitude portion of the adjusted amplitude modulated signal.

12. Device according to one of the preceding claims,
wherein a frequency of the amplitude modulated electromagnetic wave uses an Industrial Scientific Medical band, is between 50 kHz and 200 kHz, in particular between 100 kHz and 150 kHz, in particular around 125 kHz,
wherein in particular the amplitude modulated electromagnetic wave applies a amplitude shift keying modulation.

13. Device according to one of the preceding claims,
embodied as a RF-communication base station, in particular arranged within a vehicle, further in particular in a car,
wherein the base station is in particular adapted to communicate with a passive transponder and supply energy to the passive transponder using the coil.

14. Device according to claim 13, the base station further comprising:
a demodulator comprising semiconductor circuitry, connected to the output terminal and adapted to demodulate the adjusted amplitude modulated signal.

15. Method for data-reception using amplitude modulation, comprising:
receiving an amplitude modulated electromagnetic wave by a coil having a coil terminal,
inducing, in the coil, an amplitude modulated signal;
providing the amplitude modulated signal at the coil terminal, the amplitude modulated signal comprising a positive voltage portion and a negative voltage portion;
adjusting, using an adjustment circuit connected via an input terminal to the coil terminal, the amplitude modulated signal such as to reduce the positive voltage portion by a constant amount; and
providing the adjusted amplitude modulated signal at an output terminal of the adjustment circuit.
